# EUROPEAN PATENT APPLICATION

(11) **EP 2 712 909 A1**
(43) Date of publication of application: **02.04.2014**
(21) Application number: 12186566.1
(22) Date of filing: 28.09.2012
(51) Int. Cl.: C09K 11/06, H05B 33/14, C07F 15/00

(54) **Light emitting transition metal complexes based on hexadentate ligands**

(71) Applicant: Solvay SA, 1120 Brussels (BE)
(72) Inventor: de Cola, Luisa, 67000 Strasbourg (FR); Galvez-Lopez, Maria Dolores, 30100 Murcia (ES); Catinat, Jean-Pierre, 7131 Waudrez (BE)
(74) Representative: Langfinger, Klaus Dieter

(57) **Abstract**

Light emitting transition metal complexes based on asymmetric hexadentate ligands.

## Description

The present invention relates to light emitting transition metal complexes comprising transition metals and hexadentate ligands and their use for the manufacture of organic electronic devices.

US 2005/170206 discloses organic light emitting devices comprising transition metal complexes based on multidentate ligands. Symmetric tetradentate ligands wherein two 2-phenylpyridine ligand units are connected via a linker are mentioned. This reference mentions that multidentate ligands should improve the kinetic stability of the transition metal complexes manufactured using same compared to isolated bidentate ligands.

Today, various light-emitting devices are under active study and development, in particular those based on electroluminescence (EL) from organic materials.

As a first example, light emitting electrochemical cells (often referred to as LEEC or LEC) may be mentioned. LEECs are solid state devices which generate light from an electric current. LEECs are usually composed of two metal electrodes connected by an organic semiconductor containing mobile ions.

Aside from the mobile ions, the structure of LEECs is similar to a second group of light emitting organic electronic devices which are commonly referred to as organic light emitting diodes (OLEDs).

In the contrast to photoluminescence, i.e. the light emission from an active material as a consequence of optical absorption and relaxation by radiative decay of an excited state, electroluminescence (EL) is a non-thermal generation of light resulting from the application of an electric field to a substrate. In this latter case, excitation is accomplished by recombination of charge carriers of opposite signs (electrons and holes) injected into an organic semiconductor in the presence of an external circuit.

A simple prototype of an organic light-emitting diode (OLED), i.e. a single layer OLED, is typically composed of a thin film of an active organic material which is sandwiched between two electrodes, one of which needs to have a degree of transparency sufficient in order to observe light emission from the organic layer.

If an external voltage is applied to the two electrodes, charge carriers, i.e. holes, at the anode and electrons at the cathode are injected to the organic layer beyond a specific threshold voltage depending on the organic material applied. In the presence of an electric field, charge carriers move through the active layer and are non-radiatively discharged when they reach the oppositely charged electrode. However, if a hole and an electron encounter one another while drifting through the organic layer, excited singlet and triplet states, so-called excitons, are formed. Light is thus generated in the organic material from the decay of molecular excited states (or excitons). For every three triplet excitons that are formed by electrical excitation in an OLED, only one state with antiparallel spin, S=0 (singlet) exciton is created.

Many organic materials exhibit fluorescence (i.e. luminescence from a spin -allowed process) from singlet excitons; since this process occurs between states of same spin multiplicity it may be very efficient. On the contrary, if the spin multiplicity of an exciton is different from that of the ground state, then the radiative relaxation of the exciton is spin forbidden and luminescence will be slow and inefficient. Because the ground state is usually a singlet, decay from a triplet is spin-forbidden (different spin multiplicity) and efficiency of EL is very low. Thus the energy contained in the triplet states is mostly wasted.

Phosphorescence emission is a phenomenon of light emission in the relaxation process between two states of different spin multiplicity, often between a triplet and a singlet, but because the relaxation process is normally conducted by thermal deactivation, it is in many cases not possible to observe phosphorescence emission at room temperature. Characteristically, phosphorescence may persist for up to several seconds after excitation due to the low probability of the transition, in contrast to fluorescence which originates in the rapid decay.

The theoretical maximum internal quantum efficiency of light-emitting devices comprising light-emitting materials based on an emission phenomenon in the relaxation process from a singlet excited state (i.e. fluorescence emission) is at maximum 25 %, because in organic EL devices the ratio of the singlet to the triplet state in the excited state of light-emitting materials is always approximately 25:75. By using phosphorescence (emission from triplet states) this efficiency could be raised to the theoretical limit of 100 %, thereby significantly increasing the efficiency of the EL device.

As mentioned above, it is difficult to get phosphorescence emission from an organic compound because of low probability of intersystem crossing and concurrent thermal deactivation of the triplet relaxation process. However, it has been found that the presence of heavy atoms favours spin orbit coupling and therefore intersystem crossing is enhanced. This is also true when organic ligands are coordinated to heavy metals, showing phosphorescence because of the spin-orbit interaction resulting from the heavy metal atom effect.

The wavelength of the light emitted is governed by the structure and the combination of ligands in the transition metal complex.

WO 2006/08069 discloses metal complexes of formula

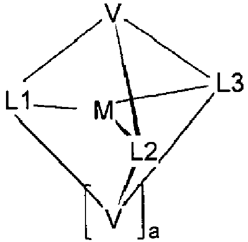

where V is a bridging unit, containing 1 to 80 atoms from the third, fourth, fifth and/or sixth main group, which covalently bonds the three part-ligands L1, L2 and L3 to one another, and where the index a is equal to 0 or 1, where, in the case a= 0, the bridging unit V is omitted; part-ligand L1 conforms to the formula Cy1-Cy2, where Cy1 and Cy2 are substituted or unsubstituted cyclic groups, each of which contains at least one donor atom or C atom in the ring or bonded exocyclically via which the cyclic group is bonded to the metal; the groups Cy1 and Cy2 are bonded to one another via a covalent bond or a common edge and may additionally be linked to one another via substituents and thus form a polycyclic, aliphatic or aromatic ring system,
part-ligand L2 is a donor ligand, containing one or more donor atoms and 2 to 40 C atoms, with the proviso that part-ligand L2 is not built up from two rings or part-rings which are both bonded to the metal and part-ligand L3 is identical to or different from part-ligand L1 or part-ligand L2, **characterized in that** part-ligand L2 is a bidentate-chelating ligand having two donor atoms, and in that furthermore either the index a = 0 or in that Cy1 is not equal to Cy2, and one of the two rings is bonded to the metal via a metal-carbon bond and the other is bonded to the metal via a donor atom other than carbon.

One of the challenges still to be satisfactorily solved in organic light emitting devices is the availability of suitable transition metal complexes providing sufficient stability in operating devices on one hand and desired photoactive properties on the other hand.

Accordingly there is still a need for phosphorescent transition metal complexes having improved stability, especially those emitting in the blue region, to obtain highly efficient and long term stable devices. Furthermore, to realize large area display and lighting applications at low cost, it is of interest to develop new emitters with sufficient solubility in suitable solvents to enable processing from solution, such as roll-to-roll printing, as the majority of known phosphorescent emitters are not soluble enough in organic solvents.

It was thus an object of the present invention to provide new transition metal complexes comprising hexadentate ligands useful in the manufacture of organic light emitting devices.

This object has been achieved with the transition metal complexes in accordance with claim 1 with a subunit comprising a hexadentate ligand.

The light-emitting transition metal complexes in accordance with the present invention comprise a transition metal M with an atomic number of at least 40 and a coordination number equal to six and a hexadentate ligand represented by the general formula (1) and coordinating to the metal through bidentate ligand units L¹ to L³

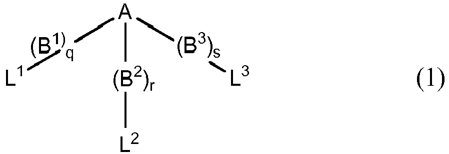

wherein B¹, B² and B³, which may be the same or different at each occurrence, are represented by general formula (2)

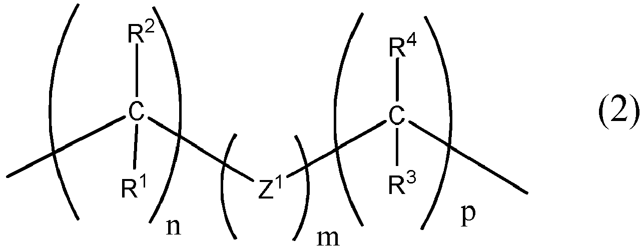

wherein Z¹ is a bivalent group selected from the group consisting of -O-, - S-, -NR⁵-, -BR⁶-, -PR⁷-, -P(=O)R⁸-, -SiR⁹R¹⁰- , -N(R¹¹)-C(=O)-, -N=C(R¹²)-, -C(=O)-, -C=NR¹³-, -C(=S)- and -P(=S)(R¹⁴)-,

wherein R¹ to R¹⁴, which may be the same or different at each occurrence, are selected from hydrogen, halogen, NO₂, CN, NH₂, NHR', N(R')₂, B(OH)₂, B(OR')₂, CHO, COOH, CONH₂, CON(R')₂, CONHR', SO₃H, C(=O)R', P(=O)(R')₂, S(=O)R', S(=O)₂R', P(R')₃⁺, N(R')₃⁺, OR', SR', and alkyl, haloalkyl, aralkyl, aryl or heteroaryl groups with R' being selected from hydrogen, alkyl, aralkyl, aryl and heteroaryl groups,
n, m and o, independently of one another, are integers of from 0 to 8, the sum of n+m+p being at least 1,
q, r and s, independent of another can be 0 or 1,

L¹, L² and L³ represent each a bidentate ligand unit selected from compounds of general formula (3), with the proviso that at least two of the ligands L¹ to L³ differ from each other,

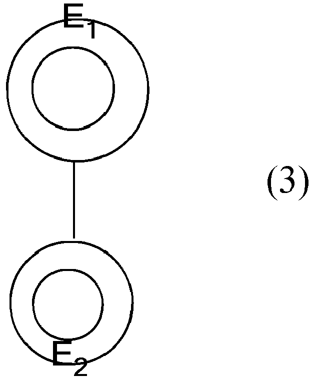

wherein
E₁ represents a nonmetallic atom group required to form a 5- or 6-membered aromatic or heteroaromatic ring, optionally condensed with additional aromatic moieties or non aromatic cycles, said ring optionally having one or more substituents, optionally forming a condensed structure with the ring comprising E₂, and

E₂ represents a nonmetallic atom group required to form a 5- or 6-membered aromatic or heteroaromatic ring, optionally condensed with additional aromatic moieties or non aromatic cycles, said ring optionally having one or more substituents, optionally forming a condensed structure with the ring comprising E₁,

wherein the rings E₁ and E₂ are linked directly via a C-C, C-N or N-N covalent single bond or together form a polycyclic aliphatic, aromatic or heteroaromatic ring system, and wherein central scaffold A is selected from the group consisting of formulae (4) to (7) 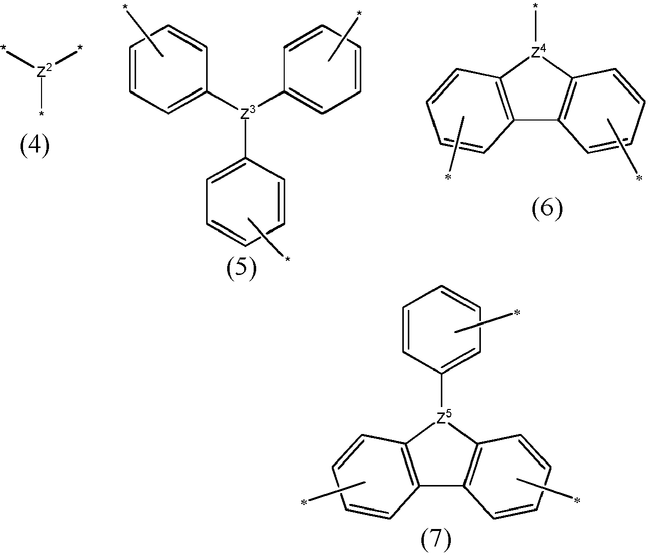 wherein the aromatic rings in formulae (5) to (7) may be unsubstituted or substituted at any available position with one or more substituents R, Z² is CR, N, RN⁺, B, RB⁻ , P, P(O), SiR, Al, RAl⁻, As, As(O), Sb, Sb(O), Bi, Bi(O), S⁺, Se⁺ or Te⁺ or a substituted or unsubstituted 5-or 6-membered carbocyclic, aromatic or heteroaromatic ring,

Z³ to Z⁵, which may be the same or different, are CR, N, RN⁺, B, RB- , P, P(O), SiR, Al, RAl⁻, As, As(O), Sb, Sb(O), Bi, and Bi(O), and wherein

R, which may be the same or different at each occurrence, is selected from the group consisting of hydrogen, alkyl, haloalkyl, aralkyl, aryl and heteroaryl, the following ligands being excluded:

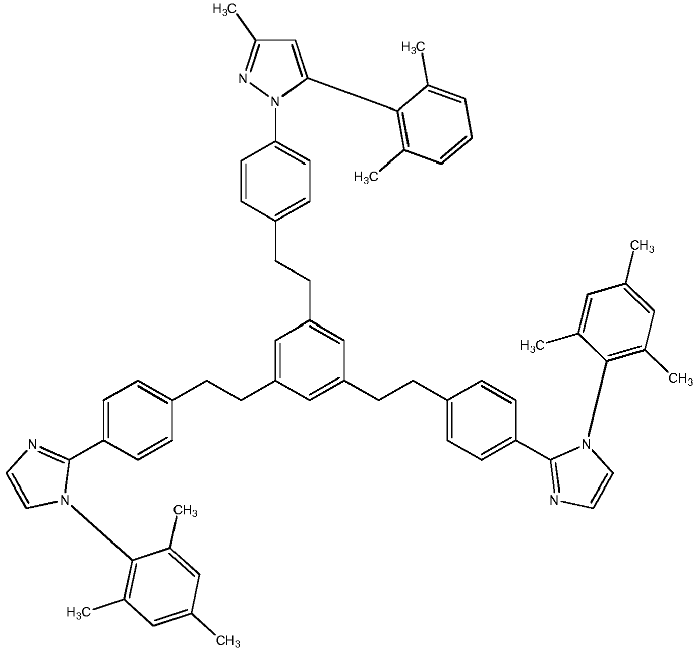

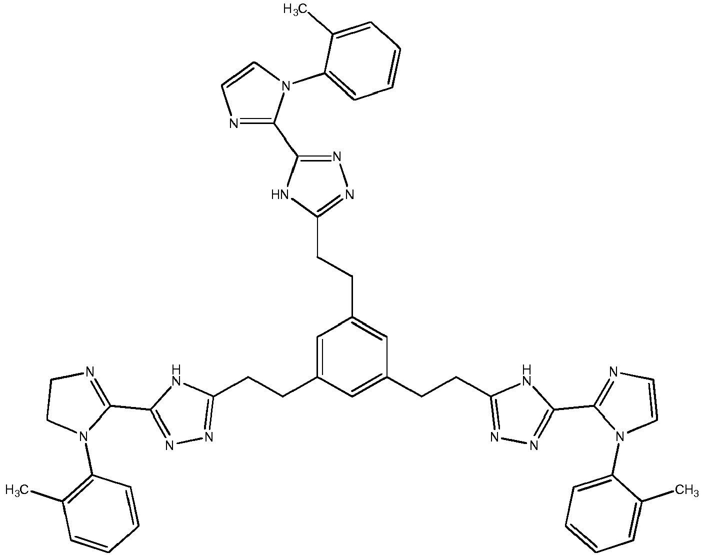

In accordance with an embodiment of the present invention, Z² is preferably a substituted or unsubstituted 5- or 6-membered carbocyclic, aromatic or heteroaromatic ring (which may carry substituents other than hydrogen). The heterocyclic rings may comprise one or more heteroatoms, preferably selected from O, N, S, P and Si, with O, N and S being particularly preferred.

In accordance with another preferred embodiment Z² is a substituted or unsubstituted 5- or 6-membered carbocyclic, aromatic or heteroaromatic ring (which may carry substituents other than hydrogen) selected from the group consisting of

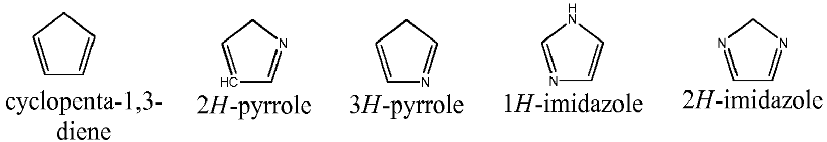

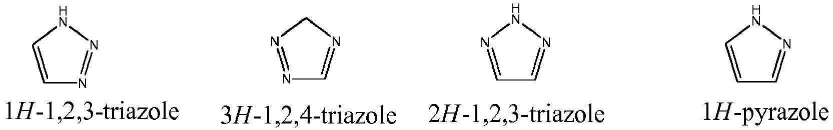

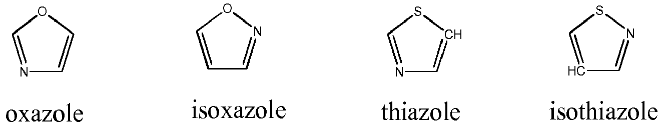

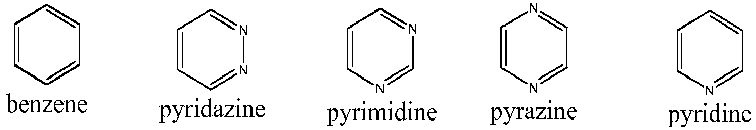

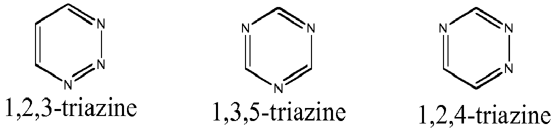

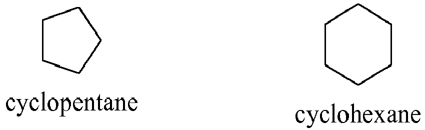

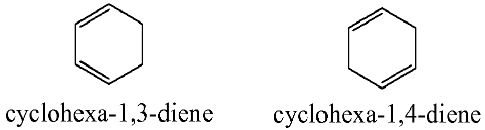

and R, which may be the same or different at each occurrence, is selected from the group consisting of hydrogen, alkyl, haloalkyl, aralkyl, aryl and heteroaryl.

Preferred alkyl groups R which include cycloalkyl groups are C₁ to C₂₀, preferably C₁ to C₁₀ and particularly preferably C₁ to C₆ alkyl groups, most preferred being methyl, ethyl, i-propyl, n-propyl, n-, i- and t-butyl, cyclopentyl, cyclohexyl and C₁₀ adamantyl groups.

Preferred haloalkyl groups R are based on the preferred alkyl groups defined above, wherein one or more of the hydrogen atoms have been replaced by one or more halogen atoms. Accordingly, preferred haloalkyl groups are based on C₁ to C₂₀, preferably C₁ to C₁₀ and particularly preferably C₁ to C₆ alkyl groups, most preferred being methyl, ethyl, i-propyl, n-propyl, n-, i- and t-butyl, cyclopentyl, cyclohexyl and C₁₀ adamantyl groups.

Preferred aralkyl groups R comprise alkyl groups as defined before wherein one or more of the hydrogen atoms have been replaced by an aryl group, preferably as defined below. The total number of carbon atoms in the aralkyl groups is between 5 and 50, preferably between 6 and 35 and particularly preferred between 6 and 25 carbon atoms. One or more carbon atoms in the aryl rings may be replaced by a heteroatom, e.g. N, O or S.

Preferred aryl groups R are 5- or 6-membered aromatic ring systems, which may carry one or more substituents other than hydrogen. Two or more rings may be annealed to form condensed structures or two and more aryl groups may be connected through a chemical bond. Examples for preferred aryl groups are phenyl, naphthyl, biphenyl, triphenyl and anthracenyl.

Preferred heteroaryl groups R are ring systems as described above for aryl rings wherein one or more of the ring carbon atoms has been replaced by a heteroatom, preferably selected from N, O and S. Preferred heteroaryl groups R are based on rings selected from the group consisting of

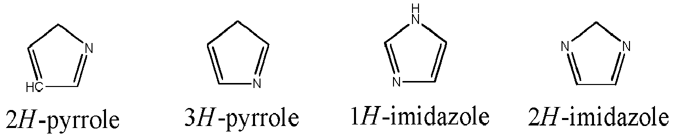

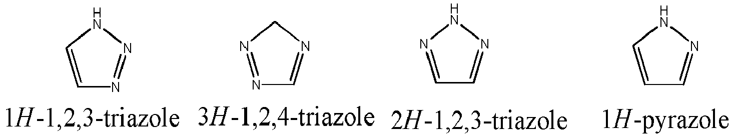

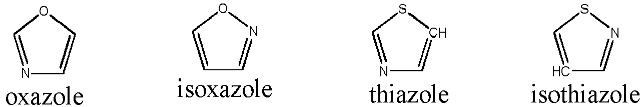

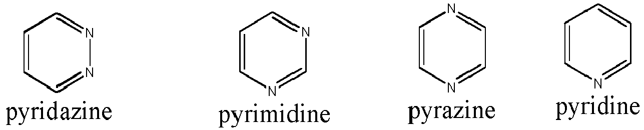

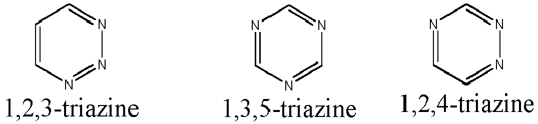

Preferred aryl and heteroaryl ring systems R comprise of from 1 to 50, preferably of from 1 to 30 and particularly preferably from 1 to 20 carbon atoms.

In yet another preferred embodiment, central scaffold A comprises a moiety which is known to make part of a host or a hole or electron transport materials used in OLEDs. Such preferred moeties are pyridine, pyrimidine, triazine, carbazole, dibenzofuran and dibenzothiophene heteroaryl rings. Other preferred moieties correspond to triphenylamine, triphenylsilyl, triarylboron and phosphine oxide groups.

In the formulae (4) to (7) given above * denotes the three bonding sites of the trivalent central scaffold A through which bidentate ligand units L¹ to L³ are bonded either directly or through arm units B¹ to B³, if present.

A is particularly preferably a CR, N, B, P, P(O), SiR group or a five or six membered carbocyclic, aromatic or heteroaromatic ring in which the arm units B¹ to B³, if present, may be attached to the ring in any combination of positions, A represents particularly preferably a CR, N, B, P(O), or SiR group or a five or six membered ring system selected from the group consisting of

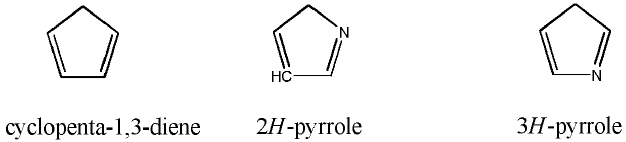

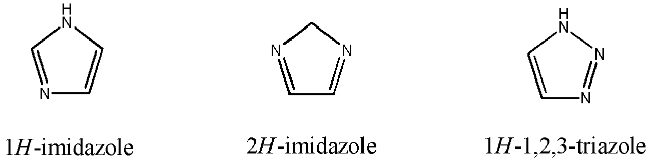

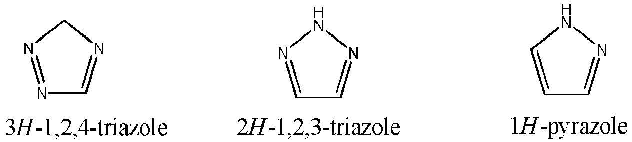

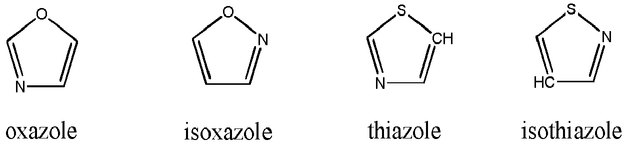

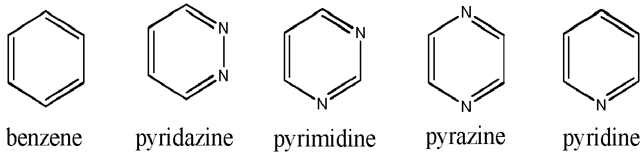

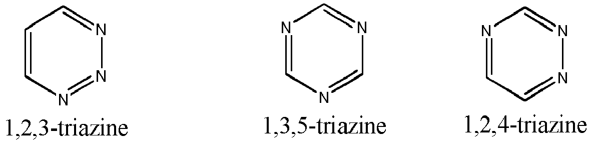

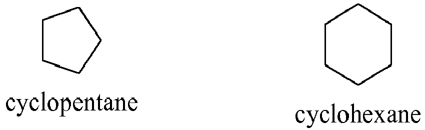

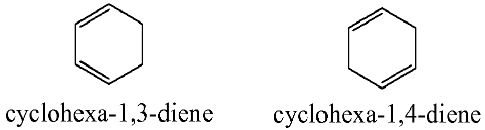

In accordance with a further preferred embodiment A is a six membered carbocyclic, aromatic or heteroaromatic ring, in particular a cyclohexane ring, a benzene ring, a pyridine ring, a pyrimidine ring, a 1,3,5- or 1,2,3-triazine ring to which arm units B¹ to B³ (if present), respectively L¹ to L³ bidentate ligand units are preferably bound in meta position to each other.

The bonding of arm units B¹ to B³ respectively L¹ to L³ bidentate ligand units in 1,2 ortho position to each other is less preferred compared to 1,3-bonding for sterical reasons.

In accordance with another preferred embodiment, trivalent central scaffold A is selected from formula (5) in which the arm units B¹ to B³ (if present) or the three ligand units L¹ to L³ directly are attached to the phenyl rings in any combination of positions, as shown in the formula.

In accordance with a further preferred embodiment, A is selected from formula (5) wherein the arm units B¹ to B³ (if present) or the three ligand units L¹ to L³ directly are attached to the phenyl rings in para positions to the Z³ atom.

In accordance with another preferred embodiment, trivalent central scaffold A is selected from formulae (6) to (7) in which the arm units B¹ to B³ (if present) or the three ligand units L¹ to L³ directly are attached to the benzene rings in any combination of positions, as shown in the formulae.

In accordance with a further preferred embodiment, A is selected from formulae (6) to (7) wherein the arm units B¹ to B³ (if present) or the three ligand units L¹ to L³ directly are attached to the benzene rings in para positions to the Z⁴ and Z⁵ atoms.

The arm units B¹ to B³, which may be the same or different at each occurrence, may be any divalent bridging group represented by formula (2) given above.

Preferred groups B¹ to B³ are selected from alkylene groups having of from 1 to 8 carbon atoms, i.e. groups of formula (2) wherein m and p are zero and n is an integer of from 1 to 8, particularly preferred from alkylene groups having of from 2 to 4 carbon atoms.

In certain cases it has proven to be advantageous if, in addition to an alkylene chain an element Z¹ is present (i.e. m is 1), which in this case is preferably -O-, -S-, -NR⁵-, -BR⁶-, -PR⁷-, -P(=O)R⁸-, -SiR⁹R¹⁰- , -N(R¹¹)-, -C(=O)-, -N=C(R¹²)-, -C(=O)-, -C=NR¹³- with R⁵ to R¹³ as defined hereinabove, in particular -O-, -S-, -NR⁵-, -N(R¹¹)-C(=O)-, -N=C(R¹²)-, -C(=O)-, -C=NR¹³- with R⁵ to R¹³ as defined hereinabove.

In accordance with another preferred embodiment B¹ to B³ represent a group of formula (2) with n being an integer of from 1 to 8, m being 1 and p being an integer of from 1 to 8, i.e. wherein two alkylene groups are separated by a group Z¹ as defined above.

In accordance with still another embodiment arm units B¹ to B³ comprise a structural element -CH₂-NH-, -CH₂-CH₂-NH-, -CH₂-N(CH₃)-, -CH₂-NH-CH₂-, -N(CH₃)-CH₂, -CH₂-CH₂-NH-C(=O)-, -CH₂-NH-C(=O)- and the equivalent structural elements wherein one or more of the hydrogen atoms attached to carbon atoms are replaced by methyl or ethyl.

The sum of n+m+p is at least 1, preferably n and p independently of one another are integers of from 0 to 8, preferably of from 0 to 4 and m is preferably 0 or 1.

In the present invention, the hexadentate ligands of the light emitting transition metal complexes of the present invention are characterized by the fact that at least two of the three ligand units L¹ to L³ differ from each other, e.g. by their composition, their E₁ and E₂ ring structure, their nature and position of the linking between rings E₁ and E₂, their substituents or the positions at which these substituents are attached.

The bidentate ligand units L¹ to L³ may be bound to arm units B¹ to B³, if present, or to central scaffold A through any position or in any manner which does not interfere with those positions through which the bidentate ligand units L¹ to L³ are bound to the transition metal in the light emitting transition metal complexes in accordance with the present invention.

The hexadentate ligands forming part of the light emitting transition metal complexes in accordance with the present invention comprise three bidentate ligand units L¹ to L³ at least two of which differ from each other as defined hereinbefore and which are linked to each other through central scaffold A or, if present, through arm units B¹ to B³ as defined hereinbefore.

In accordance with the present invention, the E₁ ring is preferably bound to the transition metal via a neutral donor atom which is a carbon in the form of a carbene or a heteroatom, preferably a nitrogen atom, and ring E₂ is preferably bound to the transition metal through a carbon atom having formally a negative charge or through a nitrogen atom having formally a negative charge.

The E₁ ring is a 5 to 6-membered aryl or heteroaryl ring. If E₁ is a heteroaryl ring it preferably contains at least one heteroatom, preferably at least one nitrogen atom. Said ring E₁ may be un-substituted or substituted by substituents selected from the group consisting of halogen, NO₂, CN , NH₂, NHR¹⁵, N(R¹⁵)₂, B(OH)₂, B(OR¹⁵)₂, CHO, COOH, CONH₂, CON(R¹⁵)₂, CONHR¹⁵, SO₃H, C(=O)R¹⁵, P(=O)(R¹⁵)₂, S(=O)R¹⁵, S(=O)₂R¹⁵, P(R¹⁵)₃⁺, N(R¹⁵)₃⁺, OR¹⁵, SR¹⁵, Si(R¹⁵)₃, and alkyl, haloalkyl, alkenyl, alkynyl, arylalkyl, aryl and heteroaryl groups with R¹⁵ being selected from hydrogen, alkyl, aralkyl, aryl and heteroaryl groups and/or may form an annealed ring system with other rings selected from cycloalkyl, aryl and heteroaryl rings. Heteroaryl substituents may be preferably un-substituted or substituted carbazolyl or un-substituted or substituted dibenzofuranyl.

More particularly E₁ is a heteroaryl ring derived from the heteroarenes group consisting of 2H-pyrrole, 3H-pyrrole, 1H-imidazole, 2H-imidazole, 4H-imidazole, 1H-1,2,3-triazole, 2H-1,2,3-triazole, 1H-1,2,4-triazole, 1H-pyrazole, 1H-1,2,3,4-tetrazole, imidazol-2-ylidene, oxazole, isoxazole, thiazole, isothiazole, 1,2,3-oxadiazole, 1,2,5-oxadiazole, 1,2,3- thiadiazole, 1,2,5-thiadazole, pyridazine, pyridine, pyrimidine, pyrazine, 1,2,3-triazine, 1,2,4-triazine, 1,3,5-triazine, 1,2,3,4-tetrazine, 1,2,4,5-tetrazine and 1,2,3,5-tetrazine rings, which may be unsubstituted or substituted as defined above.

In accordance with a further preferred embodiment the ring E2 is selected from the group consisting of substituted or un-substituted C₅-C₃₀ aryl and substituted or un-substituted C₂-C₃₀ heteroaryl groups, which E2 group may be un-substituted or substituted by substituents selected from the group consisting of halogen, NO₂, CN , NH₂, NHR¹⁵, N(R¹⁵)₂, B(OH)₂, B(OR¹⁵)₂, CHO, COOH, CONH₂, CON(R¹⁵)₂, CONHR¹⁵, SO₃H, C(=O)R¹⁵, P(=O)(R¹⁵)₂, S(=O)R¹⁵, S(=O)₂R¹⁵, P(R¹⁵)₃⁺, N(R¹⁵)₃⁺, OH, OR¹⁵, SR¹⁵, Si(R¹⁵)₃ and alkyl, haloalkyl, alkenyl, alkynyl, arylalkyl, aryl and heteroaryl groups as defined hereinabove with R¹⁵ being selected from hydrogen, alkyl, aralkyl, aryl and heteroaryl groups

E₁ and E₂ are be linked directly via a C-C, C-N or N-N covalent bond or together form a polycyclic aliphatic, aromatic or heteroaromatic ring system.

In the following a number of preferred embodiments of the present invention will be described in more detail.

According to a first preferred embodiment at least one of bidentate ligand units L¹ to L³ is represented by formulae (8) to (10) 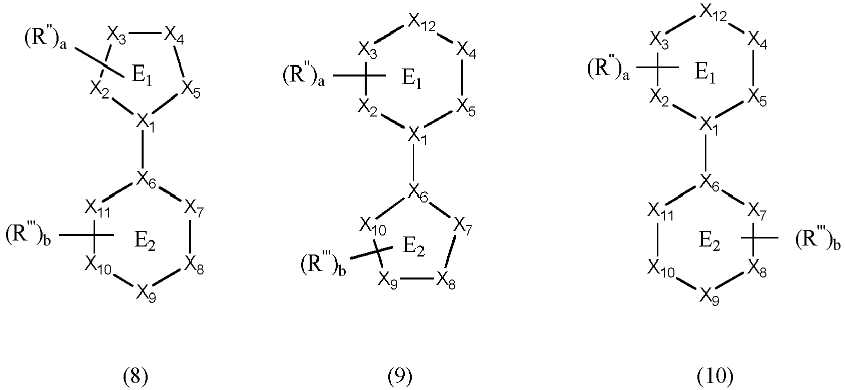 wherein
X₅ is a neutral donor atom via which the 5- or 6-membered heteroaromatic ring E1 is bonded to the metal and which is a carbon in the form of a carbene or a heteroatom, preferably a nitrogen atom, X₇ is a carbon atom having formally a negative charge or a nitrogen atom having formally a negative charge via which the 5- or 6-membered aromatic or heteroaromatic ring E₂ is bound to the metal,
X₁, X₂, X₃, X₄, X₆, X₈, X₉, X₁₀, X₁₁, X₁₂ are independently from one other a carbon or a heteroatom, preferably a nitrogen atom, with the proviso that X₄ and X₁ are a nitrogen atom if X₅ corresponds to a carbon atom in the form of a carbene.

R" and R"', which may be the same or different at each occurrence, are hydrogen, halogen, NO₂, CN, NH₂, NHR⁵¹, N(R⁵¹)₂, B(OH)₂, B(OR⁵¹)₂, CHO, COOH, CONH₂, CON(R⁵¹)₂, CONHR⁵¹, SO₃H, C(=O)R⁵¹, P(=O)(R⁵¹)₂, S(=O)R⁵¹, S(=O)₂R⁵¹, P(R⁵¹)₃⁺, N(R⁵¹)₃⁺, OH, OR⁵¹, SR⁵¹, Si(R⁵¹)₃, a straight chain alkyl or alkoxy group having 1 to 20 carbon atoms or a branched or cyclic alkyl or alkoxy group with 3 to 20 carbon atoms, a haloalkyl group, a substituted or unsubstituted aromatic or heteroaromatic ring system having 5 to 50 ring atoms or a substituted or unsubstituted aryloxy, heteroaryloxy or heteroarylamino group having 5 to 50 ring atoms, two or more substituents R" and R"', either on the same or on different rings may define a further mono- or polycyclic, aliphatic or aromatic ring system with one another or with a substituent R¹⁵, R⁵¹, which may be the same or different on each occurrence, may be hydrogen or a straight chain alkyl or alkoxy group having 1 to 20 carbon atoms or a branched or cyclic alkyl or alkoxy group with 3 to 20 carbon atoms, a substituted or unsubstituted aromatic or heteroaromatic ring system having 5 to 50 ring atoms or a substituted or unsubstituted aryloxy, heteroaryloxy or heteroarylamino group having 5 to 50 ring atoms, and a and b, independently from one another represent an integer in the range of from 0 to 3.

The three bidentate ligand units L¹ to L³, independently from each other, may be bound to arms B¹ to B³, if present, or to central scaffold A, through any position, including those from the R" and R"' substituents, or in any manner which does not interfere with those positions through which the bidentate ligand units are bound to the transition metal. The bidentate ligand units corresponding to formulae (8) to (10) are preferably bound to arms B¹ to B³, if present, or to central scaffold A, through their 6-membered E₁ and E₂ rings via those atoms which are located in para position to the E₁-E₂ bond (X₁-X₆ bond), which correspond to X₉ atom in formula (8), to X₁₂ atom in formula (9) and to X₉ and X₁₂ atoms in formula (10). The bidentate ligand units L¹ to L³ corresponding to formulae (8) to (10) are further preferably bound through their 6-membered E₁ and E₂ rings via the atom which is located in meta position to the E₁-E₂ bond (X₁-X₆ bond), which correspond to X₁₀ atom in formula (8), to X₃ atom in formula (9) and to X₃ and X₁₀ atoms in formula (10). Still another preferred linkage positions are those from 5-membered E₁ and E₂ rings corresponding to X₃ and X₄ atoms in formula (8) and to X₉ atom in formula (9).

In accordance with another preferred embodiment at least one of the bidentate ligand units L¹ to L³ is selected from the group consisting of phenylimidazole derivatives, phenylpyrazole derivatives, phenyltriazole derivatives, phenyltetrazole derivatives, 1-phenyl-imidazol-2-ylidene derivatives, 2-(1H-1,2,4-triazol-5-yl)pyridine derivatives, 2-(1H-pyrazol-5-yl)pyridine derivatives, phenylpyridine derivatives, phenylquinoline derivatives and phenylisoquinoline derivatives.

In yet another preferred embodiment of the present invention, at least one of the L¹ to L³ bidentate ligand units is selected from the group consisting of compounds of formulae (11) to (15) which pertain to general formula (8) 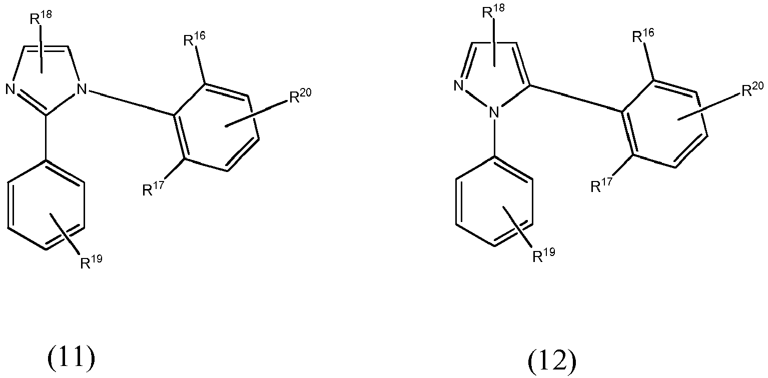 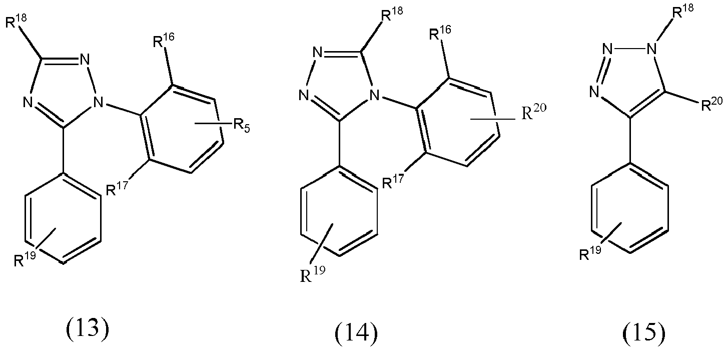 wherein R¹⁶ and R¹⁷ may be the same or different and are groups other than hydrogen, preferably selected from alkyl, haloalkyl, cycloalkyl, aryl and heteroaryl groups and more preferably from alkyl or haloalkyl groups and wherein R¹⁸ to R²⁰ may be the same or different and may be selected from the group consisting of hydrogen, halogen, NO₂, CN, NH₂, NHR²¹, N(R²¹)₂, B(OH)₂, B(OR²¹)₂, CHO, COOH, CONH₂, CON(R²¹)₂, CONHR²¹, SO₃H, C(=O)R²¹, P(=O)(R²¹)₂, S(=O)R²¹, S(=O)₂R²¹, P(R²¹)₃⁺, N(R²¹)₃⁺, OH, OR²¹, SR²¹, Si(R²¹)₃ and alkyl, haloalkyl, alkenyl, alkynyl, arylalkyl, aryl and heteroaryl group, with R²¹ being selected from hydrogen, alkyl, aralkyl, aryl and heteroaryl groups.

In accordance with yet another preferred embodiment, at least one of ligand units L¹ to L³ is selected from the group consisting of compounds of formulae (16) to (26) which pertain to general formulae (11) and (12) (formulae 16 to 25) respectively to general formula (8) (formula 26) 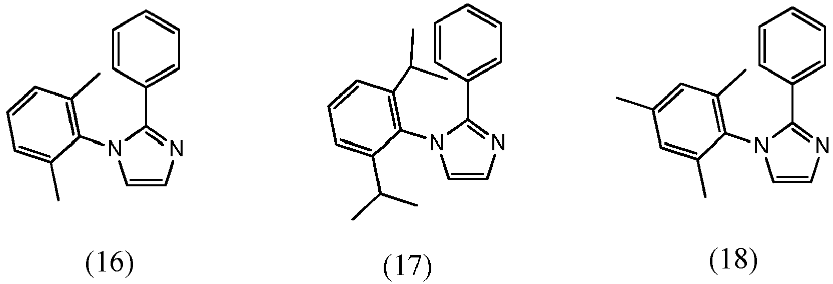 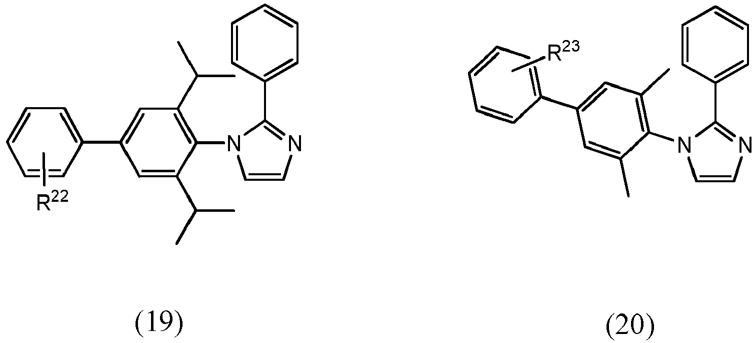 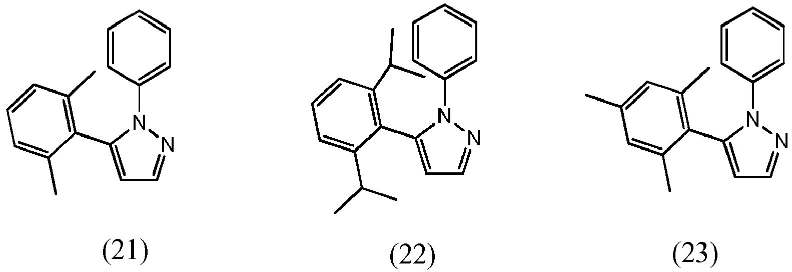 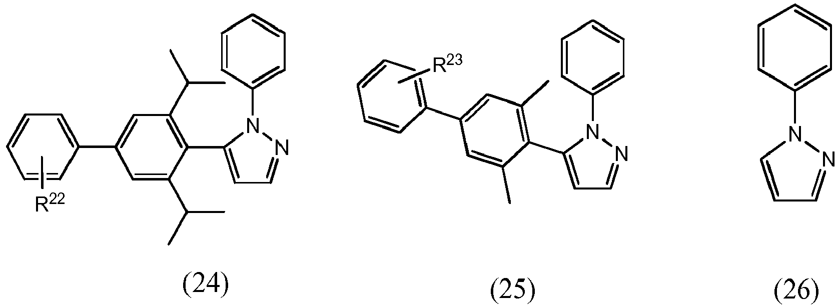 wherein R²² and R²³, independent of one another, are selected from hydrogen halogen, NO₂, CN, NH₂, NHR²⁴, N(R²⁴)₂, B(OH)₂, B(OR²⁴)₂, CHO, COOH, CONH₂, CON(R²⁴)₂, CONHR²⁴, SO₃H, C(=O)R²⁴, P(=O)(R²⁴)₂, S(=O)R²⁴, S(=O)₂R²⁴, P(R²⁴)₃⁺, N(R²⁴)₃⁺, OH, OR²⁴, SR²⁴, Si(R²⁴)₃ and alkyl, haloalkyl, alkenyl, alkynyl, arylalkyl, aryl and heteroaryl group, with R²⁴ being selected from hydrogen, alkyl, aralkyl, aryl and heteroaryl groups.

Still another preferred embodiment in accordance with the present invention is characterized by at least one of the L¹ to L³ bidentate ligand units being selected from compounds of formulae (27) and (28) which pertain to general formula (8) 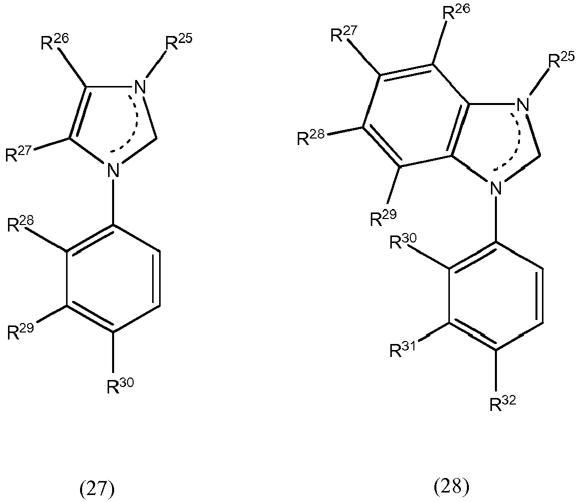 wherein R²⁵ to R³² may be the same or different at each occurrence and may be selected from the group consisting of hydrogen, halogen, NO₂, CN, NH₂, NHR³³, N(R³³)₂, B(OH)₂, B(OR³³)₂, CHO, COOH, CONH₂, CON(R³³)₂, CONHR³³, SO₃H, C(=O)R³³, P(=O)(R³³)₂, S(=O)R³³, S(=O)₂R³³, P(R³³)₃⁺, N(R³³)₃⁺, OH, OR³³, SR³³, Si(R³³)₃, and alkyl, haloalkyl, alkenyl, alkynyl, arylalkyl, aryl and heteroaryl groups, with R³³ being selected from hydrogen, alkyl, aralkyl, aryl and heteroaryl groups.

Further preferably, at least one of the L¹ to L³ bidentate ligand units is selected from compounds of the general formulae (29) and (30) which pertain to general formula (9)

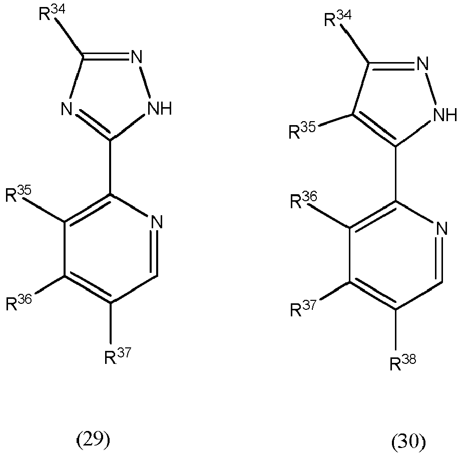

wherein R³⁴ to R³⁸ may be the same or different at each occurrence and may be selected from the group consisting of hydrogen, halogen, NO₂, CN, NH₂, NHR³⁹, N(R³⁹)₂, B(OH)₂, B(OR³⁹)₂, CHO, COOH, CONH₂, CON(R³⁹)₂, CONHR³⁹, SO₃H, C(=O)R³⁹, P(=O)(R³⁹)₂, S(=O)R³⁹, S(=O)₂R³⁹, P(R³⁹)₃⁺, N(R³⁹)₃⁺, OH, OR³⁹, SH, Si(R³⁹)₃, and alkyl, haloalkyl, alkenyl, alkynyl, arylalkyl, aryl and heteroaryl group, with R³⁸ being selected from hydrogen, alkyl, aralkyl, aryl and heteroaryl groups.

In accordance with still another preferred embodiment, at least one of the L¹ to L³ bidentate ligand units is selected from compounds of the general formulae (31) to (33) which pertain to general formula (10) 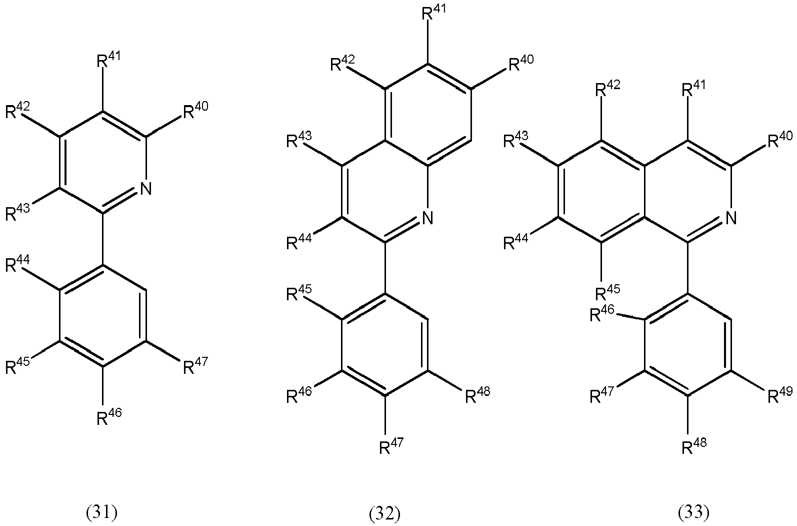 wherein R⁴⁰ to R⁴⁹ may be the same or different at each occurrence and may be selected from the group consisting of hydrogen, halogen, NO₂, CN, NH₂, NHR⁵⁰, N(R⁵⁰)₂, B(OH)₂, B(OR⁵⁰)₂, CHO, COOH, CONH₂, CON(R⁵⁰)₂, CONHR⁵⁰, SO₃H, C(=O)R⁵⁰, P(=O)(R⁵⁰)₂, S(=O)R⁵⁰, S(=O)₂R⁵⁰, P(R⁵⁰)₃⁺, N(R⁵⁰)₃⁺, OH, OR⁵⁰, SR⁵⁰, Si(R⁵⁰)₃ and alkyl, haloalkyl, alkenyl, alkynyl, arylalkyl, aryl and heteroaryl groups, with R⁵⁰ being selected from hydrogen, alkyl, aralkyl, aryl and heteroaryl groups.

As explained above, the ligand units L¹ to L³ are all represented by formula (3). Except for the condition that at least two of the ligand units L¹ to L³ have to differ from each other, they can be freely selected from all possible formulae covered by general formula (3) and preferred formulae (8) to (33) above. It is possible to select one, two or all three bidentate ligand units from the same of preferred formulae (8) to (33) above as long as at least two of them differ from each other as defined above. It is also possible to select each of the bidentate ligand units from a different formula provided hereinbefore.

The bidentate ligand units L¹ to L³ are preferably selected in such a way that the complexes comprising the hexadentate ligand involving these three ligands units emit in the desired range. Without wishing to be bound to any theory, it is believed that the emission colour of the complexes comprising a hexadentate ligand composed of three bidentate ligand units L¹ to L³ will be mainly dictated in a first approximation by the bidentate ligand unit which has the lowest triplet energy or which leads to the homoleptic complex, respectively [M(L¹)₃] , [M(L²)₃] or [M(L³)₃], emitting at the lower energy.

The bidentate ligand units L¹ to L³ may also be selected in order to impart to the complexes higher solubility in most organic solvents without changing its emission color, e.g by selecting bidentate ligand units pertaining to the same family (phenylpyrazole, phenylimidazole...).

The metal M in the light emitting transition metal complexes in accordance with the present invention represents a transition metal of atomic number of at least 40 and a coordination number equal to six, preferably Ir, Ru, Os, Re or Rh, most preferably Ir.

The light emitting materials in accordance with the present invention generally have a number of advantageous properties. The increased bulkyness of the hexadentate ligands as compared to bidentate ligands often leads to a reduced T-T annihilation at high current densities as well as to a reduced aggregate-induced concentration quenching at high doping levels, which in turn leads to an increased device efficiency.

Because of their expected less labile ligand system, higher kinetic stability, complexes involving hexadentate ligands in accordance with the present invention are believed to show improved chemical, thermal, electrochemical and photochemical stability as compared to their bidentate ligand analogs. Higher device lifetimes are thus expected.

Given their more rigid structure with decreased vibrational and rotational freedom, complexes comprising hexadentate ligands in accordance with the present invention are expected to show less efficient non-radiative decay pathways and thus increased photoluminescence quantum yields and higher device efficiencies than their bidentate analogs.

The emission color from the complexes involving hexadentate ligands in accordance with the present invention could be tuned over a large range of wavelengths according to the selected bidentate ligand units L¹ to L³. Without wishing to be bound by theory, it is believed that the emission color of the complexes comprising the hexadentate ligand with bidentate ligand units L¹ to L³ will be mainly dictated in a first approximation by that of the bidentate ligands L¹, L² or L³ having the lowest triplet energy or leading to the homoleptic complex which emits at the lowest energy.

So if one of the bidentate ligand units of the hexadentate ligand , e.g. L¹, is selected from the group consisting of compounds of formulae (11) to (26), blue emission would be expected provided L² and L³ are suitably selected from ligands having a triplet energy at least equal to that of bidentate ligand unit L¹ corresponding to compounds of formula (11) to (26). As mentioned before, especially blue-emitters need improvement in terms of lifetime and stability and the light-emitting materials in accordance with the present invention in preferred embodiments should provide significant advantages over the prior art in this regard as they should show a high efficiency while still providing a long lifetime.

In the same way, provided the right selection of the bidentate ligand units L¹ to L³ has been made, green-emitting complexes are expected when at least one of these bidentate ligands L¹, L² and L³ is selected from formula (31) and orange/red emitting complexes from bidentate ligands selected from formulae (32) and (33).

Because of expected reduced ligand scrambling when starting from a hexadentate ligand wherein three ligands units L¹ to L³ are linked to one another, the syntheses of heteroleptic complexes (L¹ ≠ L² ≠ L³) in accordance with the present invention are believed to lead to easier purification process and higher yield than synthesis starting from bidentate L¹, L² and L³ ligands, which would be highly valuable. Heteroleptic complexes are indeed of particular interest because their photophysical, thermal and electronic properties as well as their solubility can be tuned by selecting appropriate combinations of ligands. Furthermore, they have been observed in some cases (e.g. US2010/0141127A1) to yield better device lifetimes in OLEDs.

Given the very broad variety of bidentate ligand unit L¹ to L³ which could be selected in the complexes involving hexadentate ligands in accordance with the present invention, light-emitting materials combining high solubility in most organic solvents and desired emission properties, particularly in the blue region, are made available which is quite advantageous for low cost OLEDs production. It is indeed possible to properly select at least one of the bidentate ligand units L¹ to L³ in order to impart higher solubility to the light-emitting complexes without changing its emission wavelength.

Another object of the invention is the use of the light emitting transition metal complexes as above described in the emitting layer of an organic light emitting device, e.g. a light emitting electrochemical cell (LEEC) or an organic light emitting diode (OLED).

In particular, the present invention is directed to the use of the light emitting transition metal complexes as above described as dopant in a host layer, functioning as an emissive layer in an organic light emitting device.

Should the light emitting transition metal complexes be used as dopant in a host layer, they are generally used in an amount of at least 1 % wt, preferably of at least 3 % wt, more preferably of least 5 % wt with respect to the total weight of the host and the dopant and generally of at most 35 % wt, preferably at most 25 % wt, more preferably at most 15 % wt.

The present invention is also directed to an organic light emitting device, in particular an organic light emitting diode (OLED) comprising an emissive layer (EML), said emissive layer comprising the light emitting transition metal complexes or mixture of same as above described, optionally with a host material (wherein the light emitting transition metal complexes as above described are preferably present as a dopant), said host material being notably suitable in an EML in an OLED.

The present invention is also directed to light emitting electrochemical cells (LEEC) containing ionic complexes in accordance with the present invention.

An OLED generally comprises :
a substrate, for example (but not limited to) glass, plastic, metal;
an anode, generally transparent anode, such as an indium-tin oxide (ITO) anode;
a hole injection layer (HIL) for example (but not limited to) PEDOT/PSS;
a hole transporting layer (HTL);
an emissive layer (EML);
an electron transporting layer (ETL);
an electron injection layer (EIL) such as LiF, Cs₂CO₃
a cathode, generally a metallic cathode, such as an Al layer.

For a hole conducting emissive layer, one may have a hole blocking layer (HBL) that can also act as an exciton blocking layer between the emissive layer and the electron transporting layer. For an electron conducting emissive layer, one may have an electron blocking layer (EBL) that can also act as an exciton blocking layer between the emissive layer and the hole transporting layer. The emissive layer may be equal to the hole transporting layer (in which case the exciton blocking layer is near or at the anode) or to the electron transporting layer (in which case the exciton blocking layer is near or at the cathode).

The emissive layer may be formed with a host material in which the light emitting material or mixture of these materials as above described resides as a guest or the emissive layer may consist essentially of the light emitting material or mixture of these materials as above described itself. In the former case, the host material may e.g. be a hole-transporting material selected from the group of substituted tri-aryl amines. Preferably, the emissive layer is formed with a host material in which the light emitting material resides as a guest. The host material may be an electron-transporting material e.g. selected from the group of oxadiazoles, triazoles and ketones (e.g. Spirobifluoreneketones SBFK) or a hole transporting material. Examples of host materials are 4,4'-N,N'-dicarbazole-biphenyl ["CBP"] or 3,3'-N,N'-dicarbazole-biphenyl ["mCBP"] which have the formula :

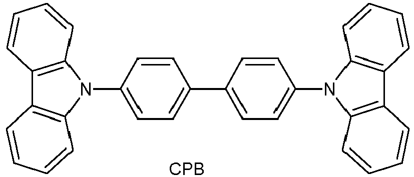

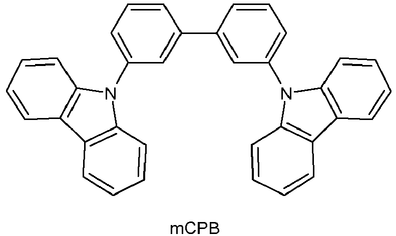

Optionally, the emissive layer may also contain a polarization molecule, present as a dopant in said host material and having a dipole moment, that generally affects the wavelength of light emitted when said light emitting material as above described, used as dopant, luminesces.

A layer formed of an electron transporting material is advantageously used to transport electrons into the emissive layer comprising the light emitting transition metal complex and the (optional) host material. The electron transporting material may be an electron-transporting matrix selected from the group of metal quinoxolates (e.g. Alq₃, Liq), oxadiazoles, triazoles and ketones (e.g. Spirobifluorene ketones SBFK). Examples of electron transporting materials are tris-(8-hydroxyquinoline)aluminum of formula ["Alq₃"] and spirobifluoreneketone SBFK:

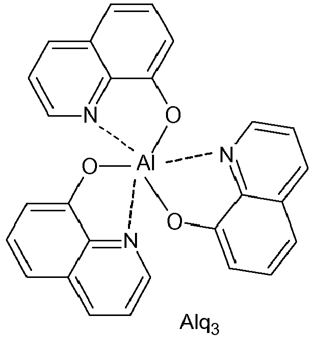

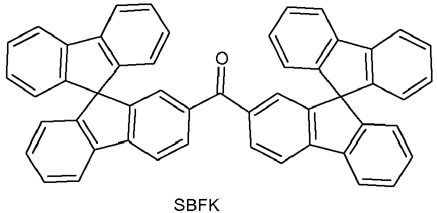

A layer formed of a hole transporting material is advantageously used to transport holes into the emissive layer comprising the light emitting material as above described and the (optional) host material. An example of a hole transporting material is 4,4'-bis[N-(1-naphthyl)-N-phenylamino]biphenyl ["α-NPD"].

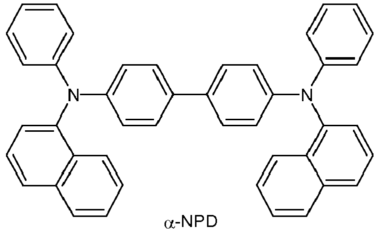

The use of an exciton blocking layer ("barrier layer") to confine excitons within the luminescent layer ("luminescent zone") is usually preferred. For a hole-transporting host, the blocking layer may be placed between the emissive layer and the electron transport layer. An example of a material for such a barrier layer is 2,9-dimethyl-4,7-diphenyl-1,10-phenanthroline (also called bathocuproine or "BCP"), which has the formula

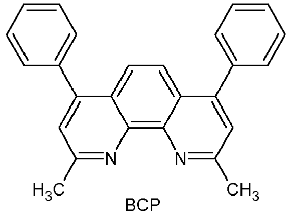

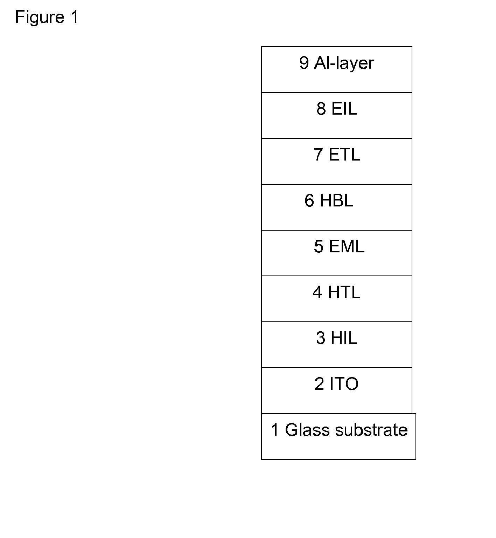

The OLED has preferably a multilayer structure, as depicted in Figure 1, wherein **1** is a glass substrate, **2** is an ITO layer, **3** is a HIL layer comprising e.g. PEDOT/PSS, **4** is a HTL layer comprising e.g. α-NPD, **5** is an EML comprising e.g. mCBP as host material and the light emitting material or mixture of these materials as above defined as dopant in an amount of about 15 % wt with respect to the total weight of host plus dopant; **6** is a HBL comprising e.g. BCP; **7** is an ETL comprising e.g. Alq₃; **8** is an EIL comprising e.g.LiF and **9** is an Al layer cathode

The hexadentate ligands forming part of the light emitting transition metal complexes in accordance with the present invention may be obtained by a number of processes which have been principally described in the literature and are known to the skilled person.

By way of example a stepwise Sonogashira coupling reaction may be mentioned here.

The Sonogashira coupling reaction is a cross coupling reaction used widely in organic synthesis to form carbon-carbon bonds between a terminal alkyne group and an aryl or vinyl halide using a palladium based catalyst. The reaction has the advantage that it can be carried out under mild conditions, e.g. at room temperature and/or in aqueous media and with mild bases which is advantageous to avoid or suppress side reactions which may occur otherwise.

In principle the starting materials of the reaction may be a compound A-(B¹)-L¹ with a terminal ethynyl group which is reacted with a compound L² bearing a halide group or starting with a compound A-(B¹)-L¹ with a halide group which is reacted with a compound L² bearing a terminal ethynyl group. Respective starting materials may be obtained in accordance with methods known to the skilled person or are available commercially form certain suppliers. A second Sonogashira coupling as described before would then yield the final hexadentate ligands.

Another possibility to obtain the hexadentate ligands present in the complexes of the present invention is the so called Suzuki-Myaura coupling, according to which phenylboronic acid reacts with haloarenes. The reaction proceeds smoothly in the presence of bases with good yields.
The principle reaction scheme for coupling two phenyl units may be depicted as follows:

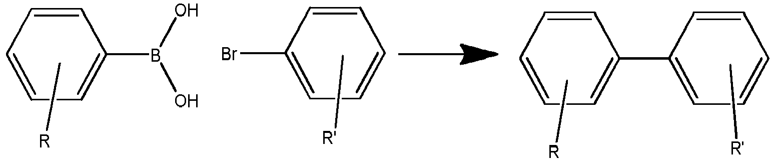

The reaction proceeds smoothly and under mild conditions with palladium compounds, e.g. tetrakis (triphenylphosphine)palladium, Pd(PPh3)4, as catalyst in the presence of bases like sodium hydroxide or sodium carbonate as bases. In some cases weak bases like sodium carbonate have proved to be advantageous over strong bases like NaOH.

Instead of the bromides, the respective iodides are also suitable reactants whereas the respective chlorides are usually inert under the reaction conditions.

Furthermore, the phenyl group in the above reaction scheme may be substituted or unsubstituted and the phenyl ring may be replaced by other aromatic or heteroaromatic ring systems to obtain a wide variety of compounds.

It is easily recognizable that subsequent repetition of this reaction can provide the desired hexadentate ligands.

Further details concerning the Suzuki-Myaura coupling and suitable reaction conditions can be taken from Suzuki et al., Synth. Comm. 11 (7), 513-519 (1981).

Still another possibility to obtain the hexadentate ligands may be the arylation of primary or secondary amines with e.g. biphenyl compounds according to the following principal reaction scheme

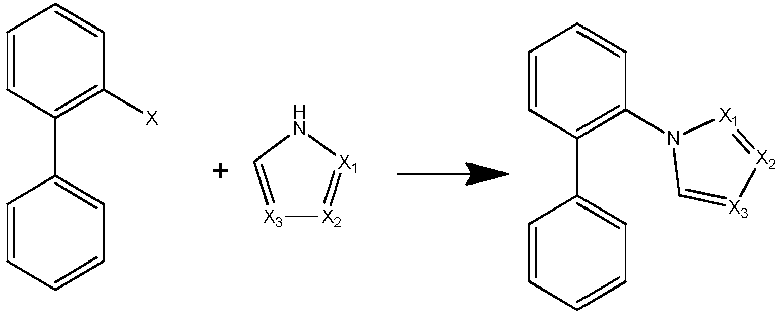

Similar to the Suzuki-Myaura coupling the reaction can be repeatedly applied to obtain the desired compounds. Further details concerning reaction conditions can be taken from Angew. Chem. Int. Ed. 42, 2051-2053 (2003) to which reference is made in this regard. Similar to the Suzuki-Myaura coupling this reaction is a versatile tool and can be applied to a broad range of starting materials.

It is also possible to combine the two aforementioned reaction in two subsequent steps to obtain desired ligands. This may be generally depicted as follows:

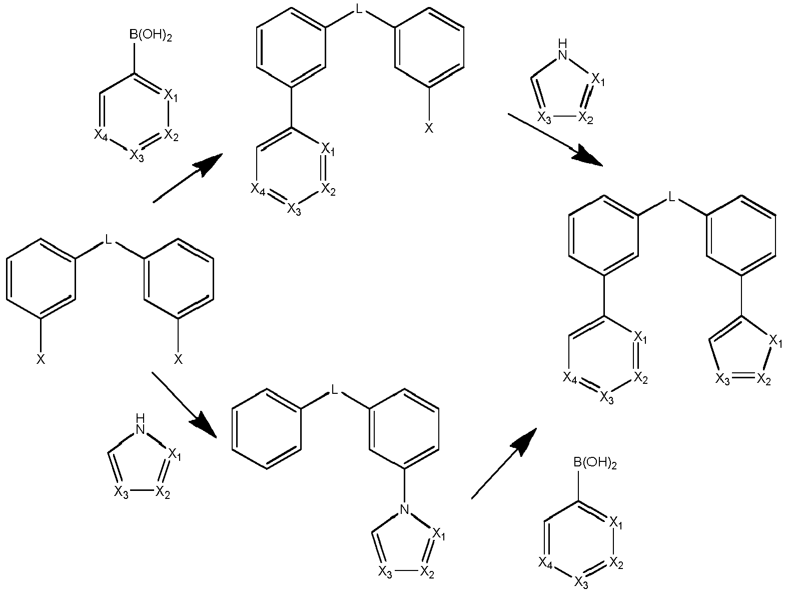

It is apparent to the skilled person that unit L in the above scheme should provide a third valency which could be used to attach the third bidentate ligand.

The skilled person will easily recognize that the upper route uses the Suzuki-Myaura coupling first followed by the amine arylation whereas the lower route uses the amine arylation first followed by a Suzuki-Myaura coupling.

In the above general reaction scheme, the aryl rings may carry substituents or may be unsubstituted.

The reaction conditions will be selected by the skilled person based on his professional knowledge and the information available for reactions of this type.

The complexes comprising the hexadentate ligands can be easily obtained by reacting the respective transition metal chlorides with the ligands in accordance with known procedures which have been described in the prior art. Usually the transition metal halides, in particular the chlorides, are used in a stoichiometric excess. The reaction can be carried out in solution, e.g. in aromatic nitrile solvents (e.g. benzonitrile) at temperatures of from 130 °C to the boiling point of the respective solvent and using reaction times of from 0.5 h to 8 h. The complexes may be purified by recrystallization, column chromatography or sublimation, to name only a few possibilities.

The skilled person will use his professional knowledge to select the suitable reactants and reaction conditions based on the specific combination of tetradentate and bidentate or monodentate ligands.

Other synthesis methods are suitable and are known to the skilled person so that no further details are necessary here.

The light emitting transition metal complexes in accordance with the present invention provide the possibility to precisely adjust and modify the properties by selection of the bidentate ligand units L¹ to L³ in accordance with the specific application case.

Thereby the emission properties of organic electronic devices comprising the light emitting materials in accordance with the present invention can be finely tuned and adjusted to the specific application.

## Claims

1. Light-emitting transition metal complexes comprising a transition metal M with an atomic number of at least 40 and a coordination number equal to six and an asymmetric multidentate ligand represented by the general formula (1) and coordinating to the metal through bidentate ligand units L¹ to L³ 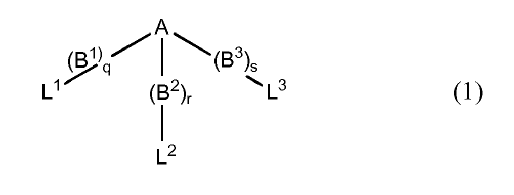 wherein B¹, B² and B³, which may be the same or different at each occurrence, are represented by general formula (2) 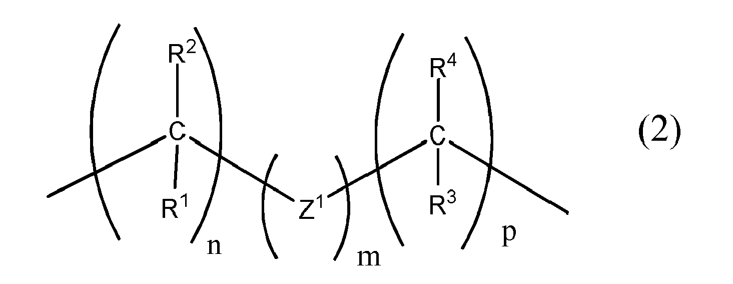 wherein Z¹ is a bivalent group selected from the group consisting of -O-, -S-, - NR⁵-, -BR⁶-, -PR⁷-, -P(=O)R⁸-, -SiR⁹R¹⁰- , -N(R¹¹)-C(=O)-, -N=C(R¹²)-, -C(=O)-, -C=NR¹³-, -C(=S)- and -P(=S)(R¹⁴)-,
wherein R¹ to R¹⁴, which may be the same or different at each occurrence, are selected from hydrogen, halogen, NO₂, CN, NH₂, NHR', N(R')₂, B(OH)₂, B(OR')₂, CHO, COOH, CONH₂, CON(R')₂, CONHR', SO₃H, C(=O)R', P(=O)(R')₂, S(=O)R', S(=O)₂R', P(R')₃⁺, N(R')₃⁺, OR', SR', and alkyl, haloalkyl, aralkyl, aryl or heteroaryl groups with R' being selected from hydrogen, alkyl, aralkyl, aryl and heteroaryl groups,
n, m and o, independently of one another, are integers of from 0 to 8, the sum of n+m+p being at least 1,
q, r and s, independent of another can be 0 or 1,
L¹, L² and L³ represent each a bidentate ligand unit selected from compounds of general formula (3) with the proviso that at least two of the ligands L¹ to L³ differ from each other, 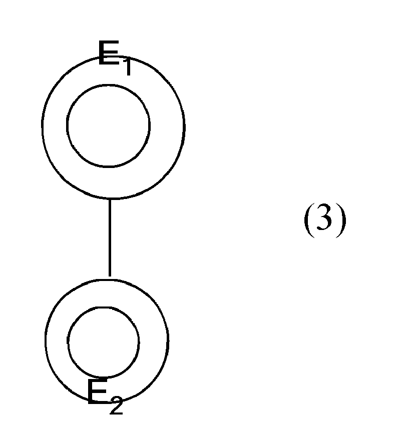 wherein
E₁ represents a nonmetallic atom group required to form a 5- or 6-membered aromatic or heteroaromatic ring, optionally condensed with additional aromatic moieties or non aromatic cycles, said ring optionally having one or more substituents, optionally forming a condensed structure with the ring comprising E_{2,}
E₂ represents a nonmetallic atom group required to form a 5- or 6-membered aromatic or heteroaromatic ring, optionally condensed with additional aromatic moieties or non aromatic cycles, said ring optionally having one or more substituents, optionally forming a condensed structure with the ring comprising E_{1,}
wherein the rings E₁ and E₂ are linked directly via a C-C, C-N or N-N covalent single bond or together form a polycyclic aliphatic, aromatic or heteroaromatic ring system, and
wherein central scaffold A is selected from the group consisting of formulae (4) to (7) 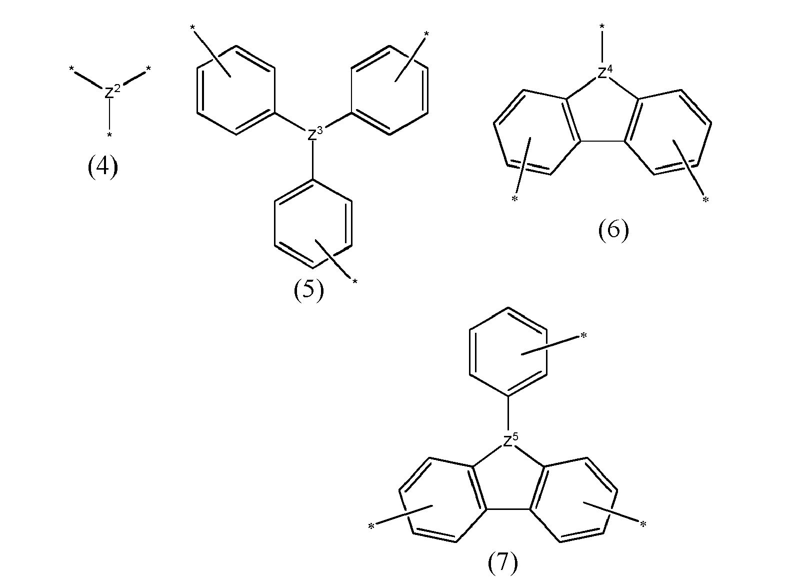 wherein the aromatic rings in formulae (5) to (7) may be unsubstituted or substituted at any available position with one or more substituents R,
Z² is CR, N, RN⁺, B, RB-, P, P(O), SiR, Al, RAl⁻, As, As(O), Sb, Sb(O), Bi, Bi(O), S⁺, Se⁺ or Te⁺ or a substituted or unsubstituted 5-or 6-membered carbocyclic, aromatic or heteroaromatic ring,
Z³ to Z⁵, which may be the same or different, are CR, N, RN⁺, B, RB- , P, P(O), SiR, Al, RAl⁻, As, As(O), Sb, Sb(O), Bi, and Bi(O),
and wherein
R, which may be the same or different at each occurrence, is selected from the group consisting of hydrogen, alkyl, haloalkyl, aralkyl, aryl and heteroaryl, the following ligands being excluded:

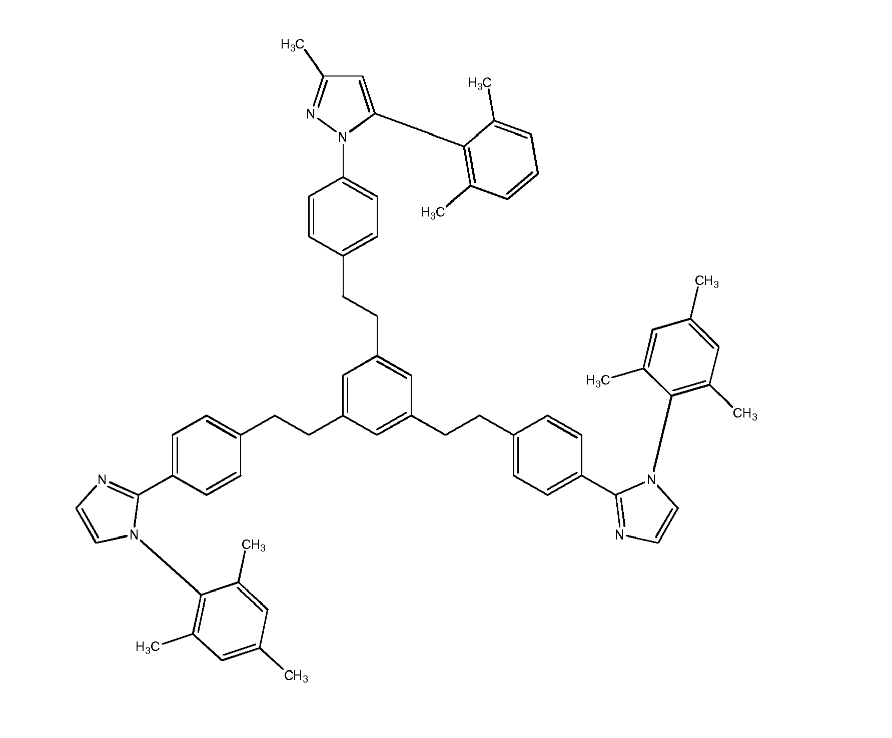

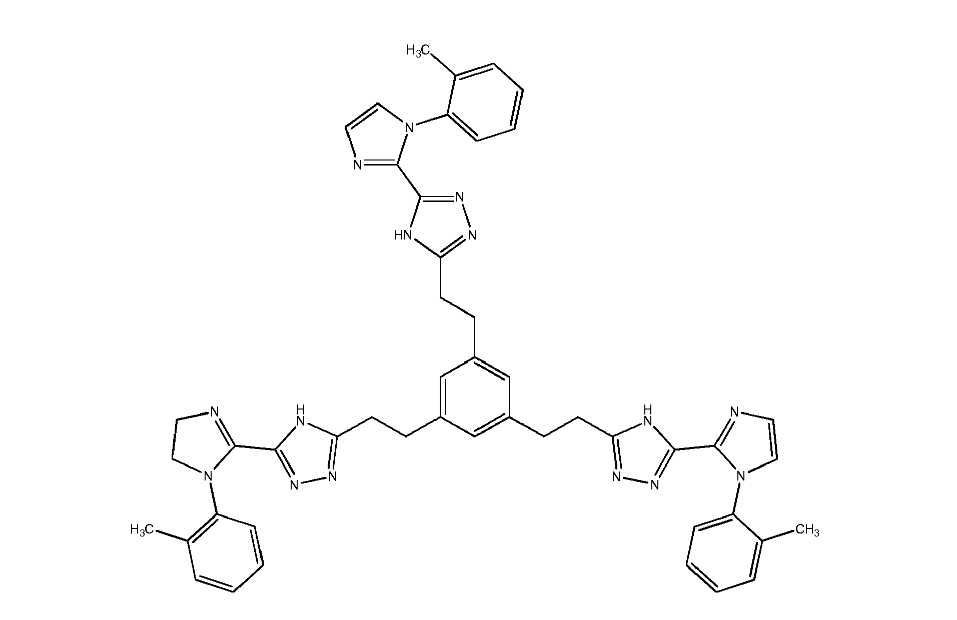

2. Light emitting transition metal complexes in accordance with claim 1 wherein the transition metal is selected from the group consisting of Re, Rh, Os, Ir and Ru, preferably Ir.

3. Light emitting transition metal complexes in accordance with any of claims 1 to 2 wherein Z² to Z⁵ independent of one another, are selected from the group consisting of CR, N, B, P, P(=O) or SiR.

4. Light emitting transition metal complexes in accordance with any of claims 1 to 2 wherein Z² to Z⁵ independent of one another represents a substituted or unsubstituted 5-or 6-membered carbocyclic, aromatic or heteroaromatic ring.

5. Light emitting transition metal complexes in accordance with any of claims 1 to 4, wherein at least one of bidentate ligands units L¹ to L³ is represented by the formulae (8) to (10) 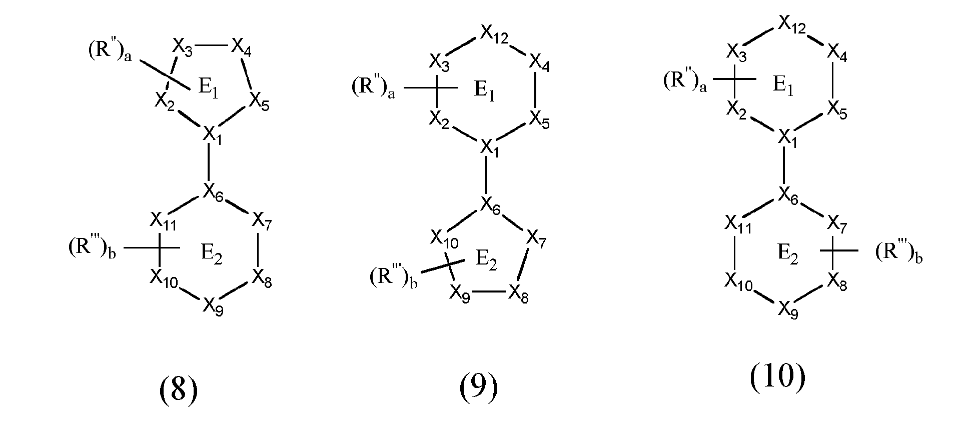 wherein
X₅ is a neutral donor atom via which the 5- or 6-membered aromatic or heteroaromatic ring E₁ is bonded to the metal and which is a carbon in the form of a carbene or a nitrogen atom,
X₇ is a carbon atom having formally a negative charge or a nitrogen atom having formally a negative charge via which the 5- or 6-membered aromatic or heteroaromatic ring E₂ is bonded to the metal,
X₁, X₂, X₃, X₄, X₆, X₈, X₉, X₁₀, X₁₁, X₁₂ are independently from one another a carbon or a heteroatom, preferably a nitrogen atom, with the proviso that X₄ and X₁ are a nitrogen atom if X₅ corresponds to a carbon atom in the form of a carbene,
R" and R"', which may be the same or different at each occurrence, are hydrogen, halogen, NO₂, CN , NH₂, NHR⁵¹, N(R⁵¹)₂, B(OH)₂, B(OR⁵¹)₂, CHO, COOH, CONH₂, CON(R⁵¹)₂, CONHR⁵¹, SO₃H, C(=O)R⁵¹, P(=O)(R⁵¹)₂, S(=O)R⁵¹, S(=O)₂R⁵¹, P(R⁵¹)₃⁺, N(R⁵¹)₃⁺, OR⁵¹ SR⁵¹, Si(R⁵¹)₃, a straight chain alkyl or alkoxy group having 1 to 20 carbon atoms or a branched or cyclic alkyl or alkoxy group with 3 to 20 carbon atoms, a haloalkyl, a substituted or unsubstituted aromatic or heteroaromatic ring system having 5 to 50 ring atoms or a substituted or unsubstituted aryloxy, heteroaryloxy or heteroarylamino group having 5 to 50 ring atoms,
two or more substituents R" and R"', either on the same or on different rings may define a further mono- or polycyclic, aliphatic or aromatic ring system with one another or with a substituent R¹⁵,
R⁵¹, which may be the same or different on each occurrence, may be hydrogen or a straight chain alkyl or alkoxy group having 1 to 20 carbon atoms or a branched or cyclic alkyl or alkoxy group with 3 to 20 carbon atoms, a substituted or unsubstituted aromatic or heteroaromatic ring system having 5 to 50 ring atoms or a substituted or unsubstituted aryloxy, heteroaryloxy or heteroarylamino group having 5 to 50 ring atoms, and a and b, independently from one another represent an integer in the range of from 0 to 3.

6. Light emitting transition metal complexes in accordance with any of claims 1 to 5, wherein at least one of bidentate ligands units L¹ to L³ is selected from the group consisting of phenylimidazole derivatives, phenylpyrazole derivatives, phenyltriazole derivatives, phenyltetrazole derivatives, 1-phenyl-imidazol-2-ylidene derivatives, 2-(1H-1,2,4-triazol-5-yl)pyridine derivatives, 2-(1H-pyrazol-5-yl)pyridine derivatives, phenylpyridine derivatives, phenylquinoline derivatives and phenylisoquinoline derivatives.

7. Light emitting transition metal complexes in accordance with any of claims 1 to 6 wherein at least one of bidentate ligands units L¹ to L³ is selected from the group consisting of compounds of formulae (11) to (15) 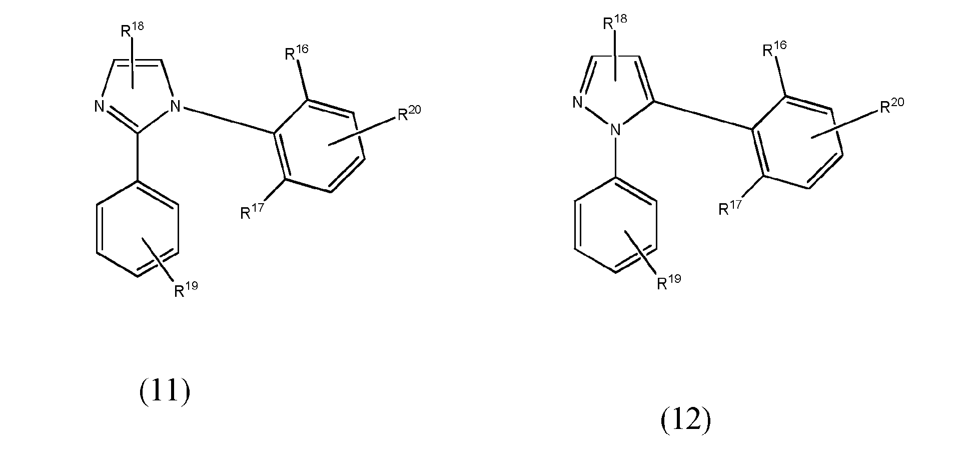 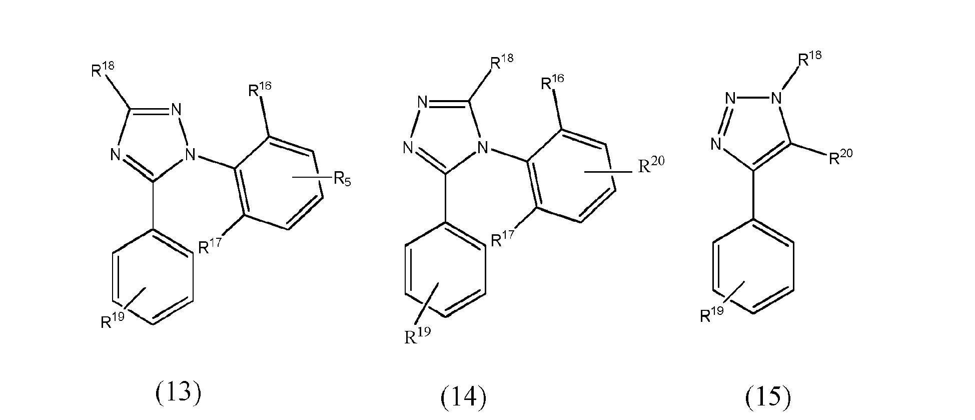 wherein R¹⁶ and R¹⁷ may be the same or different and are groups other than hydrogen selected from alkyl, haloalkyl, cycloalkyl, aryl and heteroaryl group and wherein R¹⁸ to R²⁰ may be the same or different and may be selected from the group consisting of hydrogen, halogen, NO₂, CN , NH₂, NHR²¹, N(R²¹)₂, B(OH)₂, B(OR²¹)₂, CHO, COOH, CONH₂, CON(R²¹)₂, CONHR²¹, SO₃H, C(=O)R²¹, P(=O)(R²¹)₂, S(=O)R²¹, S(=O)₂R²¹, P(R²¹)₃⁺, N(R²¹)₃⁺, OH, OR²¹, SH, SR²¹, Si(R²¹)₃, a alkyl, haloalkyl, alkoxy, alkenyl, alkynyl, arylalkyl, aryl and heteroaryl group, with R²¹ being selected from hydrogen, alkyl, aralkyl, aryl and heteroaryl groups.

8. Light emitting transition metal complexes in accordance with any of claims 1 to 6 wherein at least one of bidentate ligands units L¹ to L³ is selected from compounds of formulae (16) to (26) 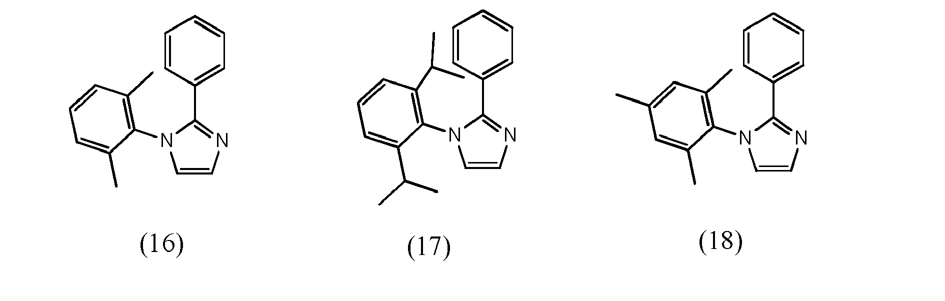 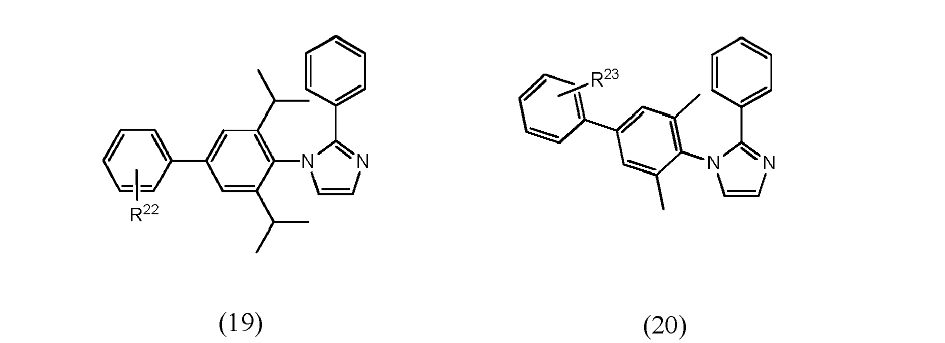 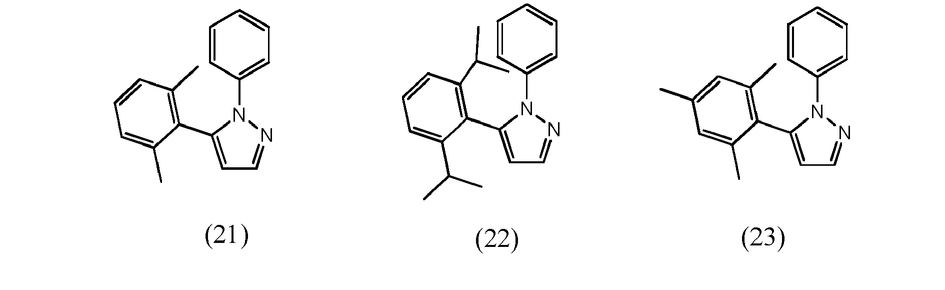 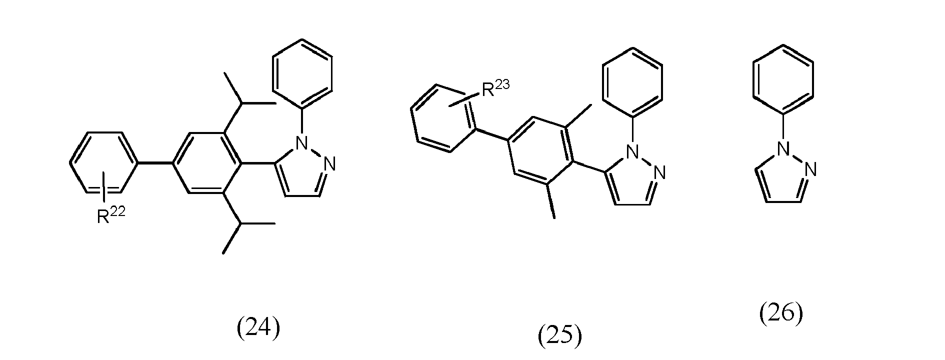 wherein R²² and R²³, independent of one another, are selected from hydrogen halogen, NO₂, CN , NH₂, NHR²⁴, N(R²⁴)₂, B(OH)₂, B(OR²⁴)₂, CHO, COOH, CONH₂, CON(R²⁴)₂, CONHR²⁴, SO₃H, C(=O)R²⁴ P(=O)(R²⁴)₂, S(=O)R²⁴, S(=O)₂R²⁴, P(R²⁴)₃⁺, N(R²⁴)₃⁺, OR²⁴, SR²⁴, Si(R²⁴)₃, and alkyl, haloalkyl, alkoxy, alkenyl, alkynyl, arylalkyl, aryl and heteroaryl groups, with R²⁴ being selected from hydrogen, alkyl, aralkyl, aryl and heteroaryl groups.

9. Light emitting transition metal complexes in accordance with any of claims 1 to 6 wherein at least one of bidentate ligands units L¹ to L³ is selected from compounds of formulae (27) and (28): 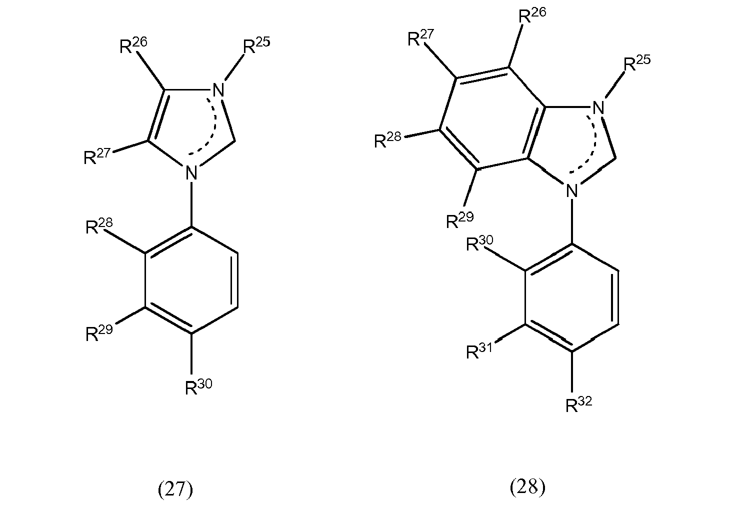 wherein R²⁵ to R³² may be the same or different at each occurrence and may be selected from the group consisting of hydrogen, halogen, NO₂, CN , NH₂, NHR³³, N(R³³)₂, B(OH)₂, B(OR³³)₂, CHO, COOH, CONH₂, CON(R³³)₂, CONHR³³, SO₃H, C(=O)R³³, P(=O)(R³³)₂, S(=O)R³³, S(=O)₂R³³, P(R³³)₃⁺, N(R³³)₃⁺, OR³³, SR³³, Si(R³³)₃, a alkyl, haloalkyl, alkoxy, alkenyl, alkynyl, arylalkyl, aryl and heteroaryl group, with R³³ being selected from hydrogen, alkyl, aralkyl, aryl and heteroaryl groups.

10. Light emitting transition metal complexes in accordance with any of claims 1 to 6 wherein at least one of bidentate ligands units L¹ to L³ is selected from compounds of the general formulae (29) and (30) 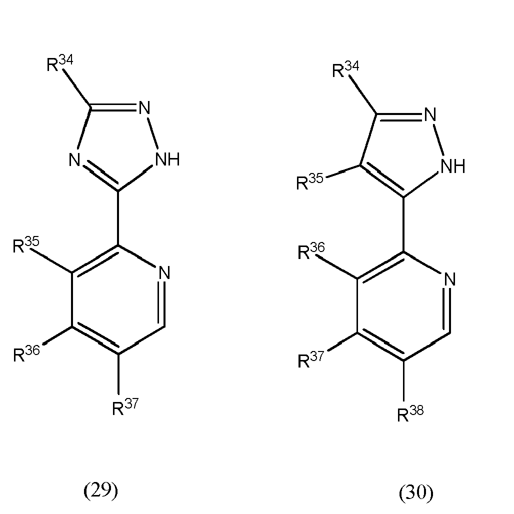 wherein R³⁴ to R³⁸ may be the same or different at each occurrence and may be selected from the group consisting of hydrogen, halogen, NO₂, CN, NH₂, NHR³⁹, N(R³⁹)₂, B(OH)₂, B(OR³⁹)₂, CHO, COOH, CONH₂, CON(R³⁹)₂, CONHR³⁹, SO₃H, C(=O)R³⁹, P(=O)(R³⁹)₂, S(=O)R³⁹, S(=O)₂R³⁹, P(R³⁹)₃⁺, N(R³⁹)₃⁺, OR³⁹, SR³⁹, Si(R³⁹)₃, a alkyl, haloalkyl, alkoxy, alkenyl, alkynyl, arylalkyl, aryl and heteroaryl group, with R³⁹ being selected from hydrogen, alkyl, aralkyl, aryl and heteroaryl groups.

11. Light emitting transition metal complexes in accordance with any of claims 1 to 6 wherein at least one of bidentate ligands L¹ to L³ is selected from compounds of the general formulae (31) to (33) 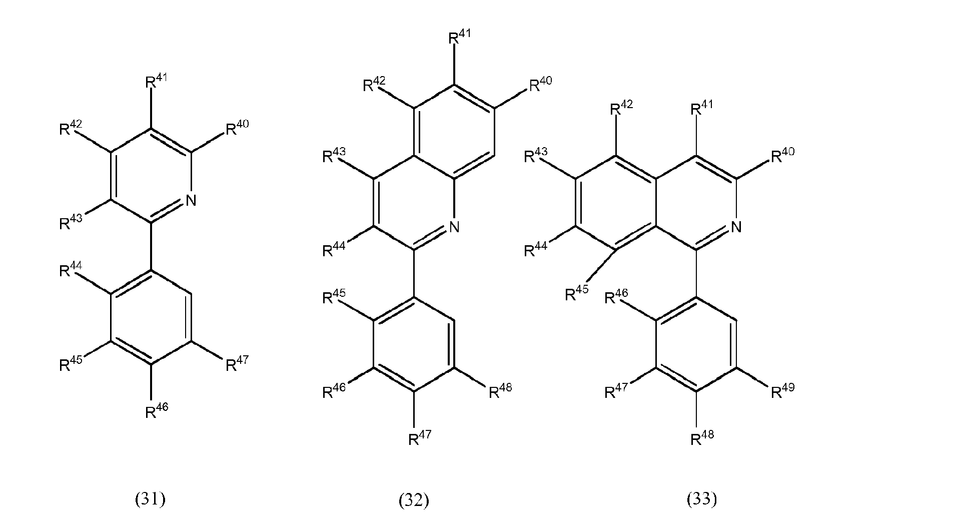 wherein R⁴⁰ to R⁴⁹ may be the same or different at each occurrence and may be selected from the group consisting of hydrogen, halogen, NO₂, CN, NH₂, NHR⁵⁰, N(R⁵⁰)₂, B(OH)₂, B(OR⁵⁰)₂, CHO, COOH, CONH₂, CON(R⁵⁰)₂, CONHR⁵⁰, SO₃H, C(=O)R⁵⁰, P(=O)(R⁵⁰)₂, S(=O)R⁵⁰, S(=O)₂R⁵⁰, P(R⁵⁰)₃⁺, N(R⁵⁰)₃⁺, OR⁵⁰, SR⁵⁰, Si(R⁵⁰)₃, a alkyl, haloalkyl, alkoxy, alkenyl, alkynyl, arylalkyl, aryl and heteroaryl group, with R⁵⁰ being selected from hydrogen, alkyl, aralkyl, aryl and heteroaryl groups.

12. Asymmetric multidentate ligands of formula (1) as defined in any of claims 1 to 11.

13. Use of the hemicaged transition metal complexes or mixtures thereof in accordance with any of claims 1 to 11 for the manufacture of organic electronic devices.

14. Organic light emitting device comprising a hemicaged transition metal complex or mixtures thereof in accordance with any of claims 1 to 11.

15. Organic light emitting device in accordance with claim 14 which is a light emitting electrochemical cell (LEEC) or an organic light emitting diode (OLED)
